# EUROPÄISCHE PATENTANMELDUNG

(11) **EP 1 684 271 A1**
(43) Veröffentlichungstag der Anmeldung: **26.07.2006**
(21) Anmeldenummer: 05001185.7
(22) Anmeldetag: 21.01.2005
(51) Int. Cl.: G11B 7/08, G11B 7/22, G02B 7/02

(54) **Optische Abtasteinrichtung für ein Gerät zum Lesen und/oder Beschreiben optischer Aufzeichnungsträger**

(71) Anmelder: DEUTSCHE THOMSON-BRANDT GMBH, 78048 Villingen-Schwenningen (DE)
(72) Erfinder: Suzuki, Tsuneo, 78087 Mönchweiler (DE); Tabor, Guenter, 78056 Villingen-Schwenningen (DE); Dupper, Rolf, 78050 Villingen-Schwenningen (DE)
(74) Vertreter: Thies, Stephan

(57) **Zusammenfassung**

Die Erfindung betrifft eine optische Abtasteinrichtung für ein Gerät zum Lesen und/ oder Beschreiben optischer Aufzeichnungsträger, mit einem bewegbar angeordneten optischen Gehäuse mit angeformten Gleitflächen zur Aufnahme eines mit Gegengleitflächen versehenen und um eine virtuelle Achse verstellbaren Trägers mit einem Abtastkopf, mit wenigstens einer am Gehäuse abgestützten und am Träger angreifenden Stellschraube, die am Rand einer im Gehäuse ausgebildeten Öffnung anliegt und diese mit ihrem Gewindeschaft in Richtung des Trägers mit Spiel durchdringt und in der Öffnung in Querrichtung bewegbar ist, und mit wenigstens einem Federmittel, das auf der der Stellschraube abgewandten Seite der Gleitflächen am Träger angreift und diesen gegen die Gleitflächen des Gehäuses spannt, und ein Gerät mit der optischen Abtasteinrichtung. Sie löst die Aufgabe, die Befestigungsanordnung der Abtasteinheit bei einer derartigen Abtasteinrichtung so zu gestalten, dass eine Verstellbewegung sanft und ruckelfrei erfolgt. Dazu greift die Stellschraube (8) neigungsveränderlich am Träger (7) an und ändert bei einer Schräubbewegung zur Veranlassung einer Verstellbewegung des Trägers (7) ihre Neigung gegenüber diesem.

## Beschreibung

Die Erfindung betrifft eine optische Abtasteinrichtung für ein Gerät zum Lesen und/ oder Beschreiben optischer Aufzeichnungsträger, bei dem die Abtasteinrichtung Informationen oder Daten in einer oder mehreren Spuren eines Aufzeichnungsträgers liest oder speichert. Der Aufzeichnungsträger kann dabei eine als CD bekannte Compact Disc, eine als DVD bekannte Digital Versatile Disc, eine CD-ROM oder DVD-ROM oder eine wiederbeschreibbare CD oder DVD oder auch ein sonstiger Aufzeichnungsträger sein.

Geräte zur Aufzeichnung oder Wiedergabe von Informationen bzw. Daten in einer oder mehreren Spuren eines Aufzeichnungsträgers, die mit einer auch als "Pick-up" bezeichneten Abtasteinrichtung zum Lesen und/ oder Aufzeichnen der Informationen versehen sind, sind bekannt. Üblicherweise weist die jeweilige Abtasteinrichtung ein schräg oder senkrecht zur jeweiligen Aufzeichnungsspur des Aufzeichnungsträgers schlittenartig verfahrbares optisches Gehäuse auf, das mit hoher Geschwindigkeit und Positioniergenauigkeit, elektromotorisch angetrieben, bewegbar ist, verbunden mit einer kurzen Zugriffszeit auf unterschiedliche Orte des Aufzeichnungsträgers, und eine optische Abtasteinheit, auch Actuator genannt, die einen Laserstrahl auf den Aufzeichnungsträger emittiert und den von dort reflektierten Strahl empfängt. Die eine Fokuslinse aufweisende Abtasteinheit ist mit einer Grundplatte an dem an Führungsstangen verfahrbaren Gehäuse verstellbar befestigt, um die Fokuslinse nach dem optischen Pfad ausrichten zu können. Letzteres ist erforderlich, weil die Abtasteinheit eine Reihe optischer Komponenten zur Lenkung und Ausrichtung des Laserstrahls auf dem Weg zum jeweiligen Aufzeichnungsträger und von diesem zu einem Detektor aufweist, die ebenso wie die diese halternden und verbindenden mechanischen Teile spezifische Fertigungs- und Montagetoleranzen haben.

Damit der jeweilige Aufzeichnungsträger positionsgenau beleuchtet und dessen Daten einem optischen Detektor präzise übermittelt werden können, ist eine Justierung der Fokuslinse bei der Montage der Abtasteinrichtung durch ein Verkippen der Abtasteinheit vorgesehen, wie das beispielsweise in der DE 694 15 762 T2 und der DE 698 01 021 T2 beschrieben ist.

Bei den bekannten Abtasteinrichtungen erfolgt die Verkippung der Abtasteinheit mit der Fokuslinse über die Grundplatte (Träger), die mit wenigstens einer Gleitfläche auf wenigstens einer am optischen Gehäuse angeformten Tragfläche ruht und die Flächen insbesondere kugel- oder zylinderförmig ausgebildet sind. Dazu ist es aus den genannten Dokumenten bekannt, die Abtasteinheit mitsamt der Grundplatte über ein Federmittel und wenigstens eine Stellschraube zu verkippen, die am Gehäuse abgestützt sind, wobei das Federmittel auf der der wenigstens einen Stellschraube abgewandten Seite der (virtuellen) Kippachse und der Abtasteinheit angeordnet ist, und auf diese Weise eine Positionsänderung der Fokuslinse herbeizuführen.

Die wenigstens eine Stellschraube ist dabei an einer Öffnung im Gehäuse quer zur Schraubenachse verschiebbar angeordnet, liegt auf der der Grundplatte abgewandten Seite des Gehäuses mit einem Schraubenkopf am Öffnungsrand an und greift mit ihrem Gewindeschaft in eine in der Grundplatte ausgebildete Gewindebohrung mit mehreren Gewindegängen spielfrei ein. Bei einer Betätigung der wenigstens einen Stellschraube wird die Grundplatte mit der Gewindebohrung um eine virtuelle Achse verkippt, wobei die Federkraft in Abhängigkeit von der Kipprichtung mehr oder weniger stark wirkt und zwischen dem Schraubenkopf und dem Gehäuse eine Reibung entsteht, die die Gleitbewegung des Schraubenkopfes am Gehäuse hemmt und die eine ruckfreie Drehbewegung der Stellschraube verhindert. Der Wechsel zwischen Haft- und Gleitreibung am Schraubenkopf führt zu einem Ruckeln ("stick-slip effekt"), das eine präzise Einstellung erschwert. Hier soll die Erfindung Abhilfe schaffen.

Es ist Aufgabe der Erfindung, bei einer optischen Abtasteinrichtung für ein Gerät zum Lesen und/ oder Beschreiben optischer Aufzeichnungsträger nach dem Oberbegriff des Anspruchs 1 die Befestigungsanordnung der Abtasteinheit an einem optischen Gehäuse zu verbessern.

Diese Aufgabe wird bei einer Abtasteinrichtung nach dem Oberbegriff des Anspruchs 1 durch dessen kennzeichnende Merkmale gelöst. Vorteilhafte Ausgestaltungen sind in den Unteranspüchen aufgeführt.

Die Erfindung besteht danach darin, dass bei einer optischen Abtastvorrichtung für ein Gerät zum Lesen und/ oder Beschreiben optischer Aufzeichnungsträger, mit einem bewegbar angeordneten optischen Gehäuse mit Gleitflächen zum anlegen eines Trägers für einen verstellbaren Abtastkopf, wobei der Träger mit wenigstens einer am Gehäuse abgestützten Stellschraube und mit wenigstens einem Federmittel an den Gleitflächen befestigt und gegen diese gespannt ist und bei einer Schraubbewegung der Stellschraube mit dem Abtastkopf um eine virtuelle Achse verstellbar ist, die Stellschraube neigungsveränderlich am Träger angreift und bei einer Schraubbewegung zur Veranlassung einer Verstellbewegung desselben ihre Neigung gegenüber diesem ändert. In bekannter Weise sind am Träger Gegengleitflächen angeordnet. In ebenso bekannter Weise greifen die Stellschraube im Abstand von den Gegengleitflächen und das Federmittel ebenso auf der der Stellschraube abgewandten Seite am Träger an. Dabei liegt die Stellschraube mit ihrem Schraubenkopf am quer zu ihrer Achse liegenden Rand einer im Gehäuse ausgebildeten Öffnung an, durchdringt diese mit ihrem Gewindeschaft mit Spiel in Richtung des Trägers und ist in der Öffnung quer zu ihrer Achse bewegbar. Diese Stellschraubenanordnung führt vorteilhaft zu einer erleichterten, weil sanft und ruckelfrei erfolgenden Einstellung des Trägers mit dem Abtastkopf. Dieses wiederum ist mit kürzeren Prozess- bzw. Einstellzeiten verbunden.

Bei einer Schraubbewegung der Stellschraube wird der Träger mit dem Abtastkopf an den bevorzugt kugel- oder zylindersegmentförmig geformten Gleitflächen verschoben und um eine virtuelle Achse verkippt. Dabei ändert sich der Neigungswinkel des Trägers gegenüber dem optischen Gehäuse. Infolge der neigungsveränderlichen Anordnung der Stellschraube am Träger wird der Schraubenkopf am Rand der Öffnung am optischen Gehäuse nicht mehr verschoben, sondern nur um eine Linie oder einen Punkt, jeweils in Abhängigkeit von der Gestaltung des Schraubenkopfes, gekippt, wodurch eine sanfte und ruckelfreie Einstellbewegung gegeben ist.

Die Neigungsveränderlichkeit der am Träger angreifenden Stellschraube wird auf einfache Weise dadurch erreicht, dass in diesen für die Stellschraube eine Gewindebohrung mit nur einem tragenden Gewindegang eingebracht ist. Bei einem verbindenden Eingriff derselben in diesen Gewindegang ist die Stellschraube an diesem gelenkartig gelagert, wobei die Festigkeit der Verbindung mit diesem einen Gewindegang etwa bei 60% der Festigkeit eines Gewindes mit mehreren Gewindegängen liegt. Dabei kann der eine Gewindegang auch noch unterbrochen und lediglich aus zwei gegenüberliegend angeordneten Gangsegmenten bestehen, wobei die Verbindungslinie zwischen diesen Gangsegmenten im wesentlichen parallel zur virtuellen Achse des Trägers verläuft und zugleich Neigungsachse für die Stellschraube ist.

Um den Abstand zwischen dem Schraubenkopf und der Neigungsachse der Stellschraube am Träger zu vergrößern, ist der Gewindegang oder sind die Gewindegangsegmente auf der dem Gehäuse abgewandten Seite in der Gewindebohrung ausgebildet. Dadurch wird der ermöglichte Neigungswinkel der Stellschraube klein gehalten, und damit verbunden auch der Durchmesser der Öffnung für die Schraube, wodurch wiederum der Schraubenkopf vorteilhaft kleiner ausfallen kann.

Um die Feineinstellung zu verbessern, sollte die Stellschraube einen möglichst großen Abstand zur virtuellen Achse haben. Dieser größere Abstand wird erreicht, indem der Träger mit einer von diesem wegweisenden Lasche versehen ist, an der die Gewindebohrung ausgebildet ist. Das optische Gehäuse ist in bekannter Weise vorteilhaft im Bereich der Lasche abgesenkt, um den maximalen Verstellwinkel des Trägers gegenüber dem optischen Gehäuse zu vergrößern.

Der Träger erstreckt sich parallel zur virtuellen Achse zwischen am Gehäuse ausgebildeten Gleitböcken, an deren freien Stirnseiten sich die Gleitflächen befinden. Dabei dienen die Gleitböcke zugleich als Führungsmittel für den Träger bei einer Verstellbewegung um die virtuellen Achse.

Die Anordnung und/ oder Ausbildung der Gleitflächen am Gehäuse ist gegenüber dem Träger bevorzugt konkav, so dass dieser mit seinen mit diesen korrespondierenden Gegengleitflächen wannenartig aufgenommen ist. Dabei können die Gleitflächen insbesondere kugel- oder zylinderförmig gestaltet sein. Vorteilhaft sind diese und die formschlüssig anliegenden Gegengleitflächen jedoch zylinderförmig ausgebildet, um eine Stellbewegung des Trägers in nur einer festgelegten Richtung zuzulassen. Alternativ zur zylindrischen Ausbildung der gehäusseitigen Gleitflächen ist auch eine ebene prismatische Ausbildung möglich, an denen die zylindrischen Gegengleitflächen parallel zur virtuellen Achse linienförmig anliegen.

Das Federmittel ist eine einfach zwischen dem Träger und dem Gehäuse anzuordnende vorgespannte Zugfeder, die an einer am Träger angeformten Lasche angreift. Diese Lasche und damit die Zugfeder sind vorteilhaft diagonal zur Stellschraube auf der anderen Seite am Träger angeordnet, weil dadurch die Führung desselben zwischen den Gleitböcken ein Verkanten bei einer Verstellbewegung verhindert und die Anordnung mit nur einer Verstellschraube auskommt.

Die Erfindung wird nachstehend anhand eines Ausführungsbeispiels erläutert. In den zugehörigen Zeichnungen zeigen:
- Fig. 1:: Eine optische Abtasteinrichtung in einer perspektivischen Darstellung,
- Fig. 2:: das optische Gehäuse der Abtasteinrichtung mit dem Träger für den Abtastkopf in einer perspektivischen Darstellung,
- Fig. 3:: das Gehäuse aus Fig. 2 in einer weiteren perspektivischen Darstellung,
- Fig. 4a bis c:: je einen Schnitt Z - Z durch eine bekannte Abtastvorrichtung mit verschiedenen Einstellungen des Trägers am optischen Gehäuse sowie mit einer Stellschraube,
- Fig. 5a und b:: die Position der Stellschraube in den Einstellungen gemäß Fig. 4b und c, vergrößert,
- Fig. 6a bis c:: je einen Schnitt Z - Z durch eine erfindungsgemäße Abtastvorrichtung mit verschiedenen Einstellungen des Trägers am optischen Gehäuse sowie mit einer Stellschraube und
- Fig. 7a und b:: die Position der Stellschraube in den Einstellungen gemäß Fig. 6b und c, vergrößert, und
- Fig. 8:: einen unterbrochenen und zwei Gangsegmente aufweisenden Gewindegang.

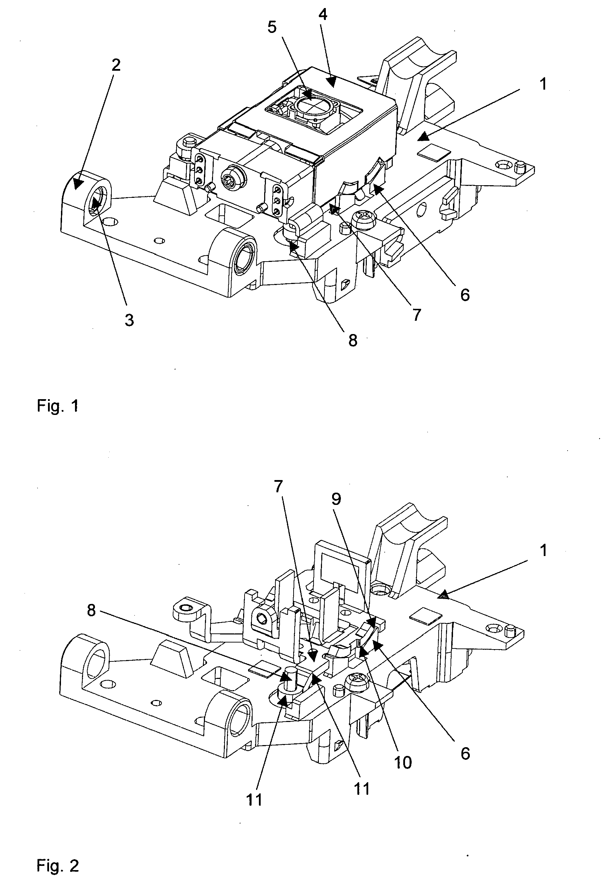

Fig. 1 zeigt eine optische Abtasteinrichtung mit einem optischen Gehäuse 1 aus Zinkdruckguss oder Kunststoff mit Führungsböcken 2 für eine lineare Bewegung, in die Bohrungen 3 zur Anordnung an einer nicht dargestellten Führungsstange eingebracht sind, und mit einem Abtastkopf 4 mit einer Fokuslinse 5. Der Abtastkopf 4 ist mit einem durch diesen verdeckten und am Gehäuse 1 auf Gleitböcken 6 verstellbar befestigten Träger 7 (Fig. 2) fest verbunden. Zur Verstellung des Trägers 7 ist eine am Gehäuse 1 abgestützte Stellschraube 8 vorgesehen, die im Abstand von den Gleitböcken 6 am Träger 7 angreift.

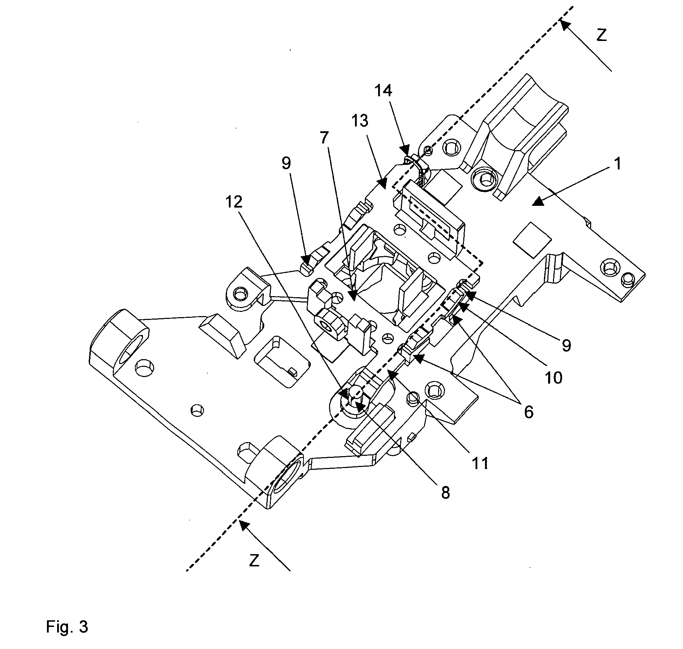

In den Fig. 2 und 3 ist die Halterung des Trägers 7 am Gehäuse 1 zu erkennen. Die an diesem angeformten Gleitböcke 6 sind an ihren Oberseiten mit konkav gekrümmten zylindrischen Gleitflächen 9 zur Aufnahme des Trägers 7 versehen, der dazu mit den Gleitflächen 9 korrespondierende Gegengleitflächen 10 aufweist, die konvex gekrümmt, zylindrisch ausgebildet und formschlüssig an den Gleitflächen 9 anliegen. Insbesondere Fig. 3 zeigt, dass die Stellschraube 8 mit einer Gewindebohrung 12 an einer am Träger 7 angeformten Lasche 11 in Eingriff steht, und dass das Gehäuse 1 im Bereich der Lasche 11 abgesenkt ist und dadurch den Bewegungsraum der Lasche 11 erweitert. Auf der der Stellschraube 8 abgewandten Seite des Trägers 7 ist diagonal zu dieser eine weitere Lasche 13 ausgebildet, an der im Abstand von den Gleitflächen 9 eine Zugfeder 14 angreift, die auch am Gehäuse 1 befestigt ist und die den Träger 7 vorgespannt an die Gleitflächen 9 drückt. Die am Gehäuse 1 vorstehenden und dem Träger 7 zugewandten Seitenflächen der Gleitböcke 6 wirken auch als Führungsflächen für den Träger 7 und verhindern dass dieser sich verkantet.

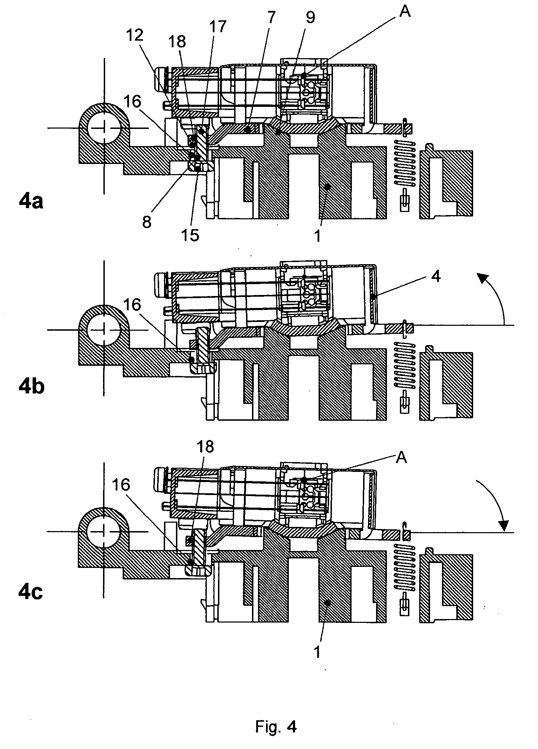

Fig. 4a bis c zeigen je einen Schnitt Z - Z durch eine bekannte Abtastvorrichtung mit verschiedenen Einstellungen des Trägers am optischen Gehäuse sowie mit einer Stellschraube 8. In der Fig. sind die Halterung des Trägers 7 und die Anordnung der Stellschraube 8 zu erkennen. Letztere liegt mit ihrem Schraubenkopf 15 an dem unteren Rand einer Öffnung 16 an und durchdringt diese mit ihrem Gewindeschaft 17, wobei der Öffnungsdurchmesser größer als der Gewindeschaftdurchmesser ist, derart, dass der Schraubenkopf 15 auch bei einer Verschiebung im Rahmen des gegebenen Spiels allseitig den Rand der Öffnung 16 überdeckt. Die Gewindebohrung 12 trägt hier auf ihrer gesamten Länge ein Gewinde 18. Aufgrund dieses mehrere Windungen umfassenden Gewindes ist die mit ihrem Schraubenkopf 15 vorgespannt am Gehäuse 1 anliegende Stellschraube 8 starr mit dem Träger 7 verbunden.

Um die Position der Fokuslinse zu korrigieren, wird der Träger 7 mit dem Abtastkopf 4 um eine virtuelle Achse A auf den Gleitflächen 9 gleitend gedreht, wodurch sich dessen Neigung gegenüber dem Gehäuse 1 ändert. Diese Korrektur erfolgt durch eine Betätigung der Stellschraube 8. In Abhängigkeit von der Korrekturrichtung wird die Stellschraube 8 entweder im Uhrzeigersinn oder im Gegenuhrzeigersinn gedreht. Im ersten Fall dreht sich der Träger 7 im Gegenuhrzeigersinn um die virtuelle Achse A und erreicht beispielsweise eine in Fig. 4b gezeigte Stellung, im zweiten Fall wird der Träger im Uhrzeigersinn gedreht und erreicht beispielsweise eine in Fig. 4c gezeigte Stellung. Die bei diesen Bewegungen jeweils erzwungene Bewegung der Stellschraube 8 führt dazu, dass der Schraubenkopf 15 relativ zum Gehäuse 1 reibgleitet d.h. eine Verschiebebewegung quer zur Schraubenachse vollführt.

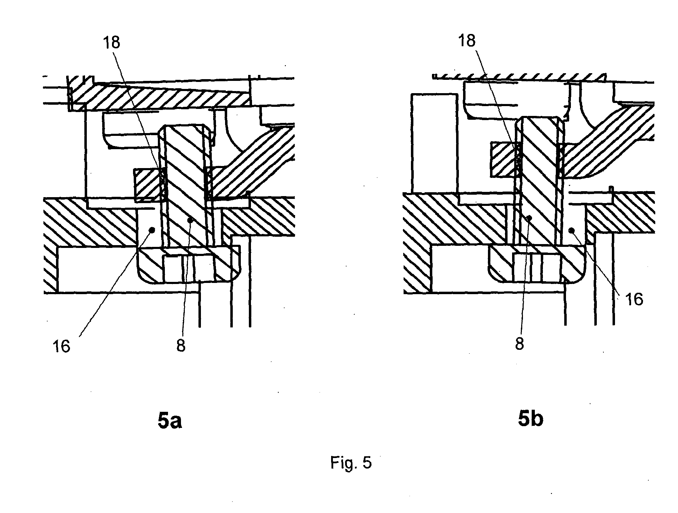

Die Fig. 5a und 5b zeigen die beiden Schraubenstellungen entsprechend Fig. 4b und 4c in vergrößertem Ausschnitt.

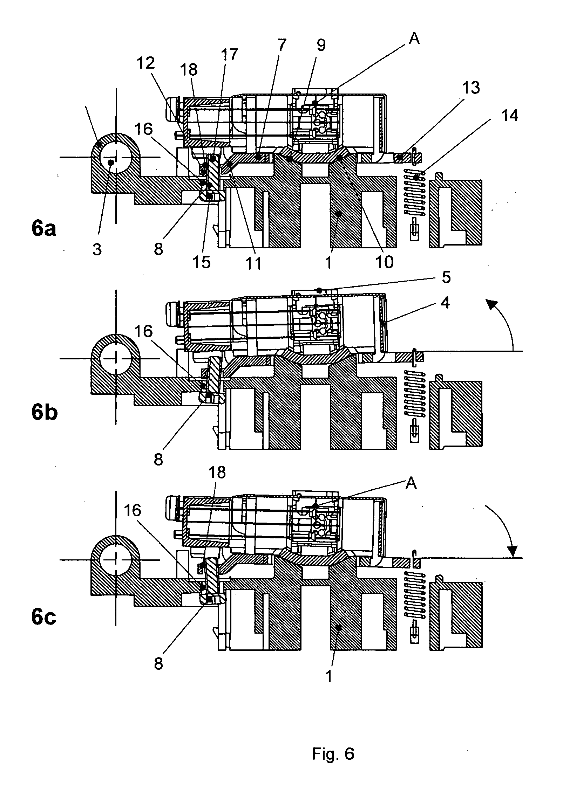

In den Fig. 6a bis 6c sind die Halterung des Trägers 7 und die Anordnung der Stellschraube 8 für eine erfindungsgemäße Abtastvorrichtung zu erkennen. In der Gewindebohrung 12 ist hier nur ein tragender Gewindegang 18 ausgebildet und dabei abtastkopfseitig, also auf der dem Gehäuse 1 abgewandten Seite, in der Gewindebohrung und damit an der Lasche 11 angeordnet. Durch diese Gewindeausbildung mit nur dem einen Gewindegang 18 kann die mit ihrem Schraubenkopf 15 vorgespannt am Gehäuse 1 anliegende Stellschraube 8 eine Kippbewegung am Gewindegang 18 ausführen, ohne dass der Schraubenkopf 15 am Gehäuse 1 reibgleitet. Statt einer derartigen Verschiebebewegung wird der Schraubenkopf 15 lediglich verkantet.

Auch hier erfolgt eine Korrektur der Position der Fokuslinse durch eine Betätigung der Stellschraube 8. Die jeweils erzwungenen Bewegungen der Stellschraube 8 werden durch deren Neigungsveränderung in der Gewindebohrung 12, wie vorstehend beschrieben, reibungs- und ruckelfrei ermöglicht.

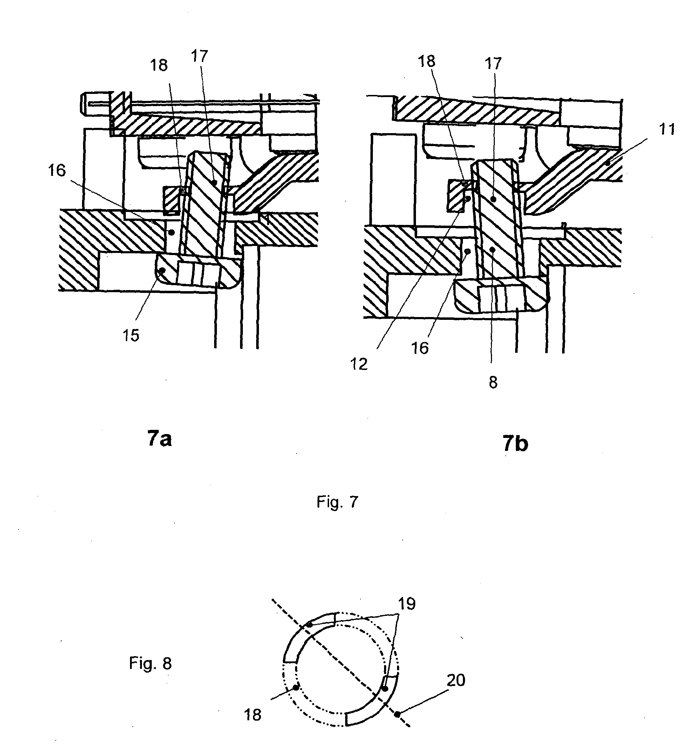

Die Fig. 7a und b zeigen die beiden Schraubenstellungen entsprechend Fig. 6b und 6c in vergrößertem Ausschnitt.

Fig. 8 zeigt die vorteilhafte Ausführungsform, dass der eine Gewindegang 18 unterbrochen ist und lediglich aus zwei gegenüberliegend angeordneten Gangsegmenten 19 besteht. Die Gangsegmente 19 sind hierbei vorteilhaft so angeordnet, dass ihre Verbindungslinie 20, die als Neigungsachse für die Stellschraube wirkt, im wesentlichen parallel zur virtuellen Achse A des Trägers 7 verläuft.

## Patentansprüche

1. Optische Abtasteinrichtung für ein Gerät zum Lesen oder zum Beschreiben oder zum Lesen und Beschreiben optischer Aufzeichnungsträger, mit einem bewegbar angeordneten optischen Gehäuse (1) mit angeformten Gleitflächen (9) zur Aufnahme eines mit Gegengleitflächen (10) versehenen und um eine virtuelle Achse (A) verstellbaren Trägers (7) mit einem Abtastkopf (4), mit wenigstens einer am Gehäuse (1) abgestützten und am Träger (7) angreifenden Stellschraube (8), die am Rand einer im Gehäuse (1) ausgebildeten Öffnung (16) anliegt und diese mit ihrem Gewindeschaft (17) in Richtung des Trägers (7) mit Spiel durchdringt und in der Öffnung (16) in Querrichtung bewegbar ist, und mit wenigstens einem Federmittel (14), das auf der der Stellschraube (8) abgewandten Seite der Gleitflächen (9) am Träger (7) angreift und diesen gegen die Gleitflächen (9) des Gehäuses spannt, **dadurch gekennzeichnet, dass** die Stellschraube (8) neigungsveränderlich am Träger (7) angreift und bei einer Schraubbewegung zur Veranlassung einer Verstellbewegung des Trägers (7) ihre Neigung gegenüber dem Träger (7) ändert.

2. Abtasteinrichtung nach Anspruch 1, **dadurch gekennzeichnet, dass** am Träger (7) eine Gewindebohrung (12) mit nur einem tragenden Gewindegang (18) für die Stellschraube (8) ausgebildet ist.

3. Abtasteinrichtung nach Anspruch 2, **dadurch gekennzeichnet, dass** der Gewindegang (18) unterbrochen ist und nur zwei einander gegenüberliegend angeordnete Gangsegmente (19) aufweist, und dass die Verbindungslinie (20) zwischen den Gangsegmenten (19) im wesentlichen parallel zur virtuellen Achse (A) des Trägers (7) verläuft.

4. Abtasteinrichtung nach Anspruch 2 oder 3, **dadurch gekennzeichnet, dass** der Gewindegang (18) oder die Gewindegangsegmente (19) auf der dem Gehäuse (1) abgewandten Seite am Träger (7) ausgebildet ist/ sind.

5. Abtasteinrichtung nach einem oder mehreren der Ansprüche 1 bis 4, **dadurch gekennzeichnet, dass** die mit dem Gewindegang (18) versehene Bohrung (12) an einer am Träger (7) ausgebildeten Lasche (11) angeordnet ist.

6. Abtasteinrichtung nach Anspruch 5, **dadurch gekennzeichnet, dass** das Gehäuse (1) im Bereich der Lasche (11) abgesenkt ist.

7. Abtasteinrichtung nach Anspruch 1, **dadurch gekennzeichnet, dass** die am Gehäuse (1) angeordneten Gleitflächen (9) an Gleitböcken (6) ausgebildet sind, die zugleich auf ihrer dem Träger (7) zugewandten Seite seitliche Führungsflächen für den Träger (7) ausbilden.

8. Abtasteinrichtung nach Anspruch 1, **dadurch gekennzeichnet, dass** die am Träger (7) ausgebildeten Gegengleitflächen (10) mit denen (9) des Gehäuses (1) in ihrer Form korrespondieren und formschlüssig an diesen anliegen.

9. Abtasteinrichtung nach Anspruch 1, **dadurch gekennzeichnet, dass** das Federmittel eine zwischen dem Gehäuse (1) und dem Träger (7) angeordnete und vorgespannte Zugfeder (14) ist, die an einer am Träger (7) angeformten Lasche (13) angreift.

10. Gerät zum Lesen oder zum Beschreiben oder zum Lesen und Beschreiben optischer Aufzeichnungsträger, das eine Abtasteinrichtung nach einem oder mehreren der Ansprüche 1 bis 9 umfasst.
